# FASCICULE DE BREVET EUROPEEN

(11) **EP 1 963 779 B1**
(45) Date de publication et mention de la délivrance du brevet: **30.07.2014**
(21) Numéro de dépôt: 06841972.0
(22) Date de dépôt: 18.12.2006
(51) Int. Cl.: G01L 1/14, G01M 13/04, G01L 5/00, G01B 7/16

(54) **DISPOSITIF DE LOGEMENT POUR PALIER MUNI D'UN SYSTEME DE DETECTION DE LA CHARGE APPLIQUEE SUR LE PALIER**
VORRICHTUNG ZUR AUFNAHME EINER LAGERUNG MIT EINEM SYSTEM ZUR ERKENNUNG DER AUF DIE LAGERUNG GELEGTEN LAST.
DEVICE FOR HOUSING A BEARING PROVIDED WITH A SYSTEM FOR DETECTING THE LOAD APPLIED TO THE BEARING

(30) Priorité: 20.12.2005 FR 0512965
(43) Date de publication de la demande: 03.09.2008
(73) Titulaire: Aktiebolaget SKF (publ), S-415 50 Göteborg (SE)
(72) Inventeur: NIARFEIX, François, 37000 Tours (FR); WABLE, Thierry, 37390 Cerelles (FR); CALVETTO, Sebastiano, 37000 Tours (FR)
(74) Mandataire: Dossmann, Gérard
(86) Numéro de dépôt international: PCT/FR2006/002769
(87) Numéro de publication internationale: WO 2007/077307

(56) Documents cités:
- DE-A1-102004 013 669
- US-A- 3 258 962
- US-A- 4 281 539
- US-A- 4 939 936

## Description

La présente invention concerne le domaine des logements pour paliers, en particulier pour les paliers à roulements, permettant la détection de la charge appliquée sur ledit palier en fonctionnement ou à l'arrêt.

Les documents DE 2729699 et US 2002/0026839 décrivent des dispositifs de logements pour roulements. Les logements sont pourvus de jauges de contraintes afin de permettre, par la mesure des variations de contraintes en certains endroits du logement, une mesure des charges appliquées sur les roulements.

De tels dispositifs utilisent des jauges de contraintes dont la mise en place est relativement délicate et souvent peu compatible avec une production en grande série à des coûts raisonnables.

Le document FR 2 863 706 décrit un dispositif de mesure de charge sur un palier pour machine à laver, comprenant des condensateurs pourvus d'un isolant dont l'épaisseur peut varier en fonction de la charge et d'un moyen de mesure de la capacité du condensateur, la capacité étant représentative de la charge appliquée perpendiculairement sur les électrodes, l'une des électrodes étant formée par une des bagues du palier. Ce dispositif fonctionne de façon satisfaisante. Toutefois, dans certaines applications, il est souhaitable de bénéficier d'une précision de mesure élevée selon au moins une direction perpendiculaire à l'axe du roulement et par conséquent de bénéficier d'une variation d'entrefer plus importante et d'une hystérésis nulle ou négligeable.

L'invention a notamment pour but de remédier aux défauts évoqués ci-dessus.

L'invention vise une mesure de charge fiable et précise, basée sur la mesure des déplacements dus à des déformations élastiques du logement sous la charge, la configuration du dispositif permettant une mesure sensiblement non affectée par une hystérésis.

L'invention a également pour but de réaliser un dispositif de mesure de charge très peu sensible aux variations de condition environnementales telles que les variations de température.

Le dispositif de logement est pourvu d'un système de détection de la charge appliqué sur un élément disposé dans le logement, d'une partie interne configurée pour supporter ledit élément, d'une partie externe servant à la fixations du dispositif sur un ensemble mécanique. La partie interne est reliée à la partie externe par au moins deux éléments de liaison déformables, de telle sorte que la partie interne puisse se déplacer par rapport à la partie externe sous l'action d'une charge appliquée sur ledit élément. Le système de détection de la charge appliquée comprend un moyen de détection du déplacement de l'une des parties, interne ou externe, par rapport à l'autre partie, externe ou interne, sous l'action d'une charge appliquée sur ledit élément. Une portion de détection mobile est liée rigidement à la partie interne et est mobile sous l'action de la charge. La partie externe comprend une portion de détection fixe venant en regard avec la portion de détection mobile pour former au moins un entrefer avec ladite portion de détection mobile. Les portions de détection sont disposées à proximité du plan axial de symétrie sensiblement perpendiculaire à la charge à mesurer. On bénéficie d'une sensibilité élevée offrant ainsi d'excellents résultats de mesure. Les éléments de liaison sont capables de se déformer élastiquement dans une plage de charge appliquée suffisamment large pour l'application considérée, et ce avec une hystérésis négligeable.

Dans un mode de réalisation, la portion de détection de la partie interne est découplée de la partie externe par rapport à laquelle ladite portion de détection peut se déplacer sans contact. Le système de détection de la charge appliquée comprend également des moyens de détection pour mesurer les déplacements de la partie interne par l'intermédiaire des variations de l'entrefer entre les portions de détection fixe et mobile.

Les portions de détection peuvent être disposées à proximité d'un plan axial de symétrie, sensiblement perpendiculaire à la charge à mesurer. Le dispositif peut comprendre au moins deux plans de symétrie perpendiculaires entre eux.

Avantageusement, la partie externe, la partie interne et les éléments de liaison forment un ensemble monobloc. Ledit ensemble monobloc peut être obtenu en grande série par moulage d'un alliage métallique ou d'un matériau synthétique ayant des propriétés mécaniques, notamment d'élasticité, souhaitées pour l'application considérée. Un même moule prévu pour un ensemble monobloc peut servir à la fabrication d'ensembles monoblocs de caractéristiques élastiques différentes, selon la composition choisie du matériau, ce qui s'avère particulièrement économique.

Dans- un mode de réalisation, la portion de détection fixe est rapportée à l'intérieur de la partie externe.

Dans un autre mode de réalisation, la portion de détection fixe est monobloc avec la partie externe.

Avantageusement, les parties fixe et mobile étant séparées par un entrefer entre des électrodes supportées par la partie fixe et par la partie mobile, l'entrefer reste sensiblement constant lorsque la température varie, les épaisseurs et les coefficients de dilatation thermique des portions du corps d'épreuve susceptibles de faire varier l'entrefer et des électrodes étant déterminés de telle sorte qu'une variation positive d'au moins un élément est compensée par une variation négative d'au moins un autre élément. L'entrefer peut être sensiblement constant sur une plage de températures, par exemple de 0 à + 50°C dans le domaine de l'électroménager.

En d'autres termes, les épaisseurs et les coefficients de dilatation thermique des composants susceptibles de faire varier l'entrefer, notamment les parties de détection fixes et mobiles et des électrodes étant déterminés de telle sorte qu'une variation positive d'un élément est compensée par une variation négative d'un autre élément. La somme des produits de l'épaisseur par le coefficient de dilatation thermique des éléments produisant une variation positive de l'entrefer peut être égale à la somme des produits de l'épaisseur par le coefficient de dilatation thermique des éléments produisant une variation négative de l'entrefer.

Le dispositif étant symétrique par rapport à un plan passant par un axe géométrique dudit dispositif, le produit du coefficient de dilatation thermique de la partie fixe et de la distance entre le plan et une face de la partie fixe peut être égal à la somme du produit du coefficient de dilatation thermique de la partie mobile et de la distance entre le plan et une face de la partie mobile et du produit du coefficient de dilatation thermique d'une première électrode et de l'épaisseur de l'électrode.

Dans un mode de réalisation, le moyen de détection du déplacement de la partie- mobile par rapport à la partie fixe comprend au moins un capteur capacitif. Le dispositif peut comprendre deux paires d'électrodes pour effectuer une mesure différentielle.

Dans un autre mode de réalisation, le moyen de détection directe du déplacement de la partie mobile par rapport à la partie fixe comprend au moins un capteur inductif.

Le dispositif peut comprendre un module de calcul de la charge appliquée au dispositif, en fonction du déplacement détecté par le système de détection. Le déplacement détecté peut évoluer linéairement en fonction de la charge appliquée.

Ledit élément disposé dans le logement peut comprendre un roulement.

Une machine à laver peut comprendre un tambour monté à rotation sur un bâti fixe au moyen d'au moins un palier à roulement disposé dans un dispositif tel que décrit ci dessus. Le bâti supporte le dispositif.

Grâce à l'invention, on bénéficie d'un logement permettant une mesure simple et fiable de la charge appliquée, en évitant une hystérésis importante compliquant l'exploitation des données de mesure.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'un dispositif de logement muni d'un palier monté sur un arbre ;
- les figures 2 et 3 sont des vues en perspective du dispositif de logement de la figure 1 ;
- la figure 4 est une vue de détail en coupe radiale du dispositif de la figure 1 ; et
- les figures 5 et 6 montrent des variantes de la figure 4.

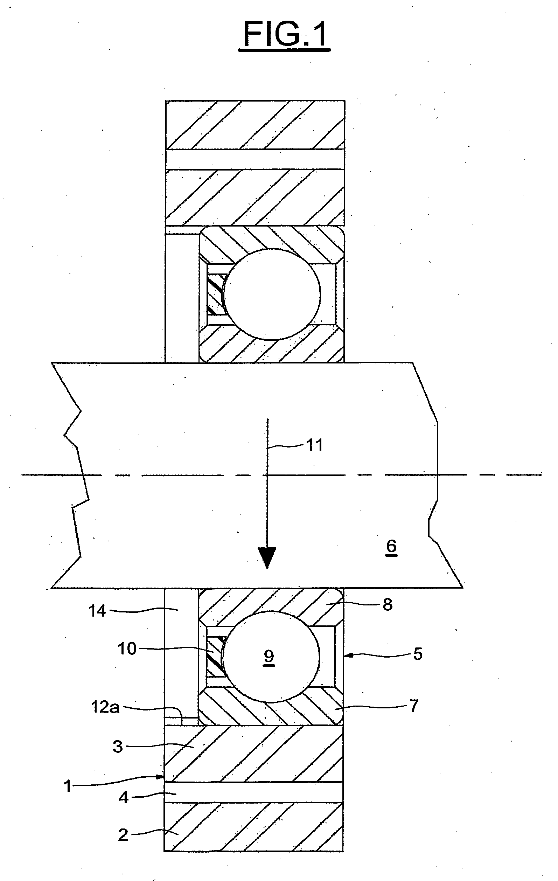

Comme on peut le voir sur la figure 1, le dispositif de logement 1 comprend une partie externe 2 et une partie interne 3 séparées par un espace 4. Les parties externe 2 et interne 3 sont délimitées par deux plans radiaux. La partie interne 3 est pourvue d'un alésage, dans lequel est disposé un palier à roulement 5 monté sur un arbre 6. La partie externe 2 est prévue pour être disposée dans un ensemble mécanique, par exemple un carter, un bâti ou un support, non représenté.

Le palier à roulement 5 comprend une bague extérieure 7, une bague intérieure 8, une rangée d'éléments roulants 9, ici des billes, maintenus à espacements circonférentiels réguliers par une cage 10. Les éléments roulants 9 sont disposés entre un chemin de roulement intérieur de la bague extérieure 7 et un chemin de roulement extérieur de la bague intérieure 8. Le palier à roulement 5 est délimité par la surface extérieure axiale de la bague extérieure 7, l'alésage de la bague intérieure 8 et les surfaces frontales radiales des bagues extérieure 7 et intérieure 8 qui passent d'un côté et de l'autre des éléments roulants 9, chacune par un plan radial, confondu d'un côté avec le plan radial délimitant le dispositif de logement 1. Les bagues 7 et 8 sont ici réalisées en métal, par exemple en acier, et les chemins de roulement font l'objet d'un usinage avec enlèvement de copeaux.

L'arbre 6 est susceptible de subir une charge radiale orientée dans le sens de la flèche 11. Ladite charge provoque un léger déplacement radial de l'arbre 6, du palier à roulement 5 et de la partie interne 3 par rapport à la partie externe 2.

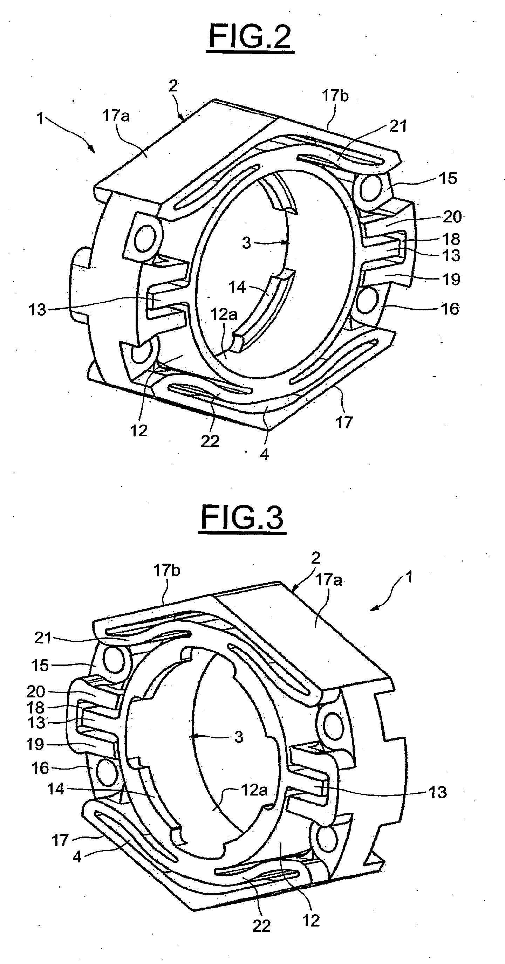

La structure du dispositif de logement 1 est exposée plus en détail sur les- figures 2 et 3. La partie interne 3 comprend un corps de forme annulaire, délimité axialement par les plans radiaux précités et présentant une épaisseur sensiblement constante. La partie interne 3 comprend également deux portions de détection mobile 13, en forme d'oreilles diamétralement opposées s'étendant vers l'extérieur à partir du corps 12. Dans l'exemple illustré, les portions de détection mobile 13 présentent une longueur axiale sensiblement égale à celle du corps 12 et du dispositif de logement 1. La partie interne 3 comprend également un rebord 14, se présentant sous la forme d'une pluralité de segments séparés les uns des autres et circonférentiellement régulièrement répartis, affleurant avec l'un des plans radiaux délimitant le dispositif de logement 1 et s'étendant radialement vers l'intérieur à partir de l'alésage 12a du corps annulaire 12. Le rebord 14 sert de butée axiale au palier à roulement 5, lors du montage dudit palier à roulement 5 dans le logement, et garantit ainsi un positionnement axial du palier à roulement 5. Les portions de détection mobile 13 et le rebord 14 sont monoblocs avec le corps 12.

La partie externe 2 comprend un corps 15, prévu pour être monté dans l'alésage d'un carter ou équivalent. Le corps 15 comprend deux portions épaisses 16, symétriques par rapport à un plan passant par l'axe du dispositif de logement 1, et deux portions 17 de faible épaisseur radiale, chacune en forme de toit, possédant deux pans 17a et 17b, se rejoignant dans un plan de symétrie passant par l'axe du dispositif de logement 1. Les pans 17a et 17b présentent une épaisseur sensiblement constante, sauf à l'endroit de leur jonction, en raison d'un large congé de raccordement, du côté concave, c'est-à-dire du côté intérieur. Les pans 17a et 17b se raccordent aux portions épaisses 16 à l'opposé de l'arête du toit.

Chaque portion épaisse 16 comprend une rainure 18 s'étendant axialement sur toute la longueur du dispositif de logement 1, et dans laquelle vient en saillie la portion de détection mobile 13 de la partie interne 3. La portion épaisse 16 se prolonge radialement vers l'intérieur pour former des portions de détection fixe 19 et 20, en forme de mâchoire, entourant la portion de détection mobile 13.

Le dispositif de logement 1 se complète par une portion de liaison 21 pourvue de quatre bras 22, de forme arrondie et déformable, se raccordant à la partie externe 3, sensiblement au niveau du raccordement entre la portion épaisse 16 et la portion de faible épaisseur 17, et se raccordant à la partie interne 3 au droit de la jonction entre les pans 17a et 17b de la portion de faible épaisseur 17. Au même endroit, deux bras 22 symétriques se raccordent également l'un à l'autre. Entre les raccordements précités, les bras 22 présentent une forme arrondie entre la partie interne 3 et la portion de faible épaisseur 17 et s'étendent axialement sur tout ou partie de la longueur du dispositif de logement 1.

La partie externe 2, la partie interne 3 et la partie de liaison 21 sont monoblocs et peuvent être réalisées par moulage d'un matériau synthétique conducteur, ou encore par moulage d'un métal, par exemple d'un alliage d'aluminium. Le dispositif de logement 1 est symétrique par rapport à deux plans perpendiculaires passant par l'axe dudit logement 1, l'un des plans passant par la jonction entre les pans 17a et 17b, et l'autre plan passant par les portions de détection mobile 13, qui sont ainsi angulairement décalés de 180°.

A l'état de repos, l'entrefer entre la portion de détection mobile 13 et la portion de détection fixe 19 est égal à l'entrefer entre la portion de détection mobile 13 et la portion de détection fixe 20, et ce d'un côté et de l'autre du dispositif de logement 1. Lorsqu'une charge radiale est appliquée, par exemple selon la direction 11, c'est-à-dire verticalement vers le bas, la partie externe 2 reste sensiblement immobile, tandis que la partie interne 3 se déplace dans le sens de la charge appliquée. Ainsi, l'entrefer entre la portion de détection mobile 13 et la portion de détection fixe 19 diminue, et l'entrefer entre la portion de détection mobile 13 et la portion de détection fixe 20 s'accroît. Les bras de liaison 21 se déforment vers le bas, sans substantiellement déformer la portion interne 3 en raison, d'une part, de sa structure annulaire, et d'autre part, de la symétrie du dispositif de logement 1 dans son ensemble, et sans non plus déformer substantiellement la partie externe 2, notamment en raison de la forte épaisseur de la portion épaisse 16, une légère déformation de la portion de faible épaisseur 17 pouvant être tolérée sans nuire à la mesure.

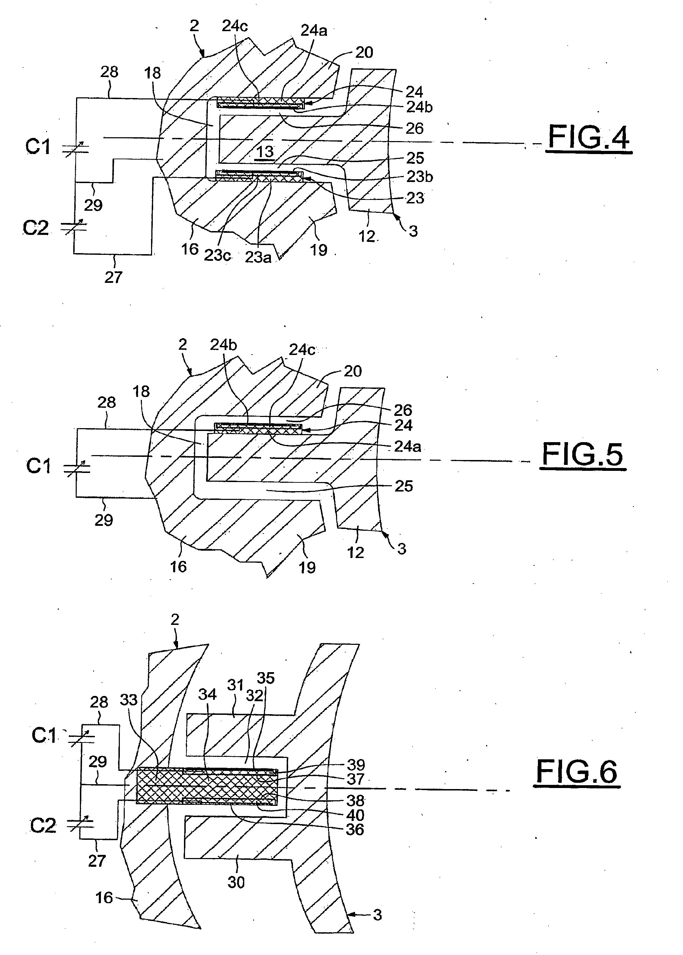

Comme illustré sur la figure 4, la partie externe 2 supporte deux électrodes rapportées 23 et 24, respectivement disposées sur les portions de détection fixes 19 et 20, sur les bords opposés de la rainure 18. Chaque électrode 23, 24 comprend une couche isolante 23a, 24a, par exemple réalisée en matériau synthétique, une couche conductrice 23b, 24b disposée du côté de la portion de détection mobile 13, et une couche conductrice 23c, 24c interne ou électrode de garde formant un blindage électromagnétique. Plus particulièrement, chaque électrode 23, 24 peut être réalisée par une portion de carte de circuit imprimée, dont le support forme la couché isolante 23a, 24a, et dont les circuits conducteurs métalliques forment les couches conductrices 23b, 24b et 23c, 24c. Les électrodes 23 et 24 peuvent ainsi être fabriquées à faible coût, puis fixées, par exemple par collage, sur les bords de la rainure 18.

On forme ainsi un circuit électrique comprenant deux condensateurs de capacités variables, C1 et C2, le condensateur C1 étant formé par la couche conductrice 24b et la portion de détection mobile 13 séparée par un entrefer, et le condensateur C2 étant formé par la couche conductrice 23b de l'électrode 23, et la portion de détection mobile 13 séparée par un entrefer 25.

La capacité de chaque condensateur C1, C2 est directement représentative de la valeur des entrefers 25 et 26 et, par conséquent, de la charge appliquée sur la partie interne du dispositif de logement 1, dans la mesure où l'application de la charge provoque le déplacement de la portion de détection mobile 13 par rapport aux électrodes 23 et 24 qui restent fixes. Chaque électrode 23, 24 est pourvue d'un fil de sortie 27, 28, et la masse conductrice du dispositif de logement 1 est reliée par un fil 29 permettant ainsi l'exploitation des signaux de sortie.

Dans le mode de réalisation illustré sur la figure 5, le dispositif est dépourvu d'électrode 23. Seule la capacités. C1 varie alors en fonction de l'entrefer entre la portion de détection mobile 13 et l'électrode 24. L'entrefer entre la portion de détection mobile 13 et le bord de la rainure 18 opposé à l'électrode 24 reste sans influence, dans la mesure où les deux surfaces sont équipotentielles grâce à la réalisation monobloc en matériau conducteur de la partie externe 2, de la partie interne 3 et de la partie de liaison 21 du dispositif de logement 1.

Dans le mode de réalisation illustré sur la figure 6, le schéma électrique est semblable à celui de la figure 4, avec deux condensateurs C1 et C2. Toutefois, la partie interne 3 comprend deux portions de détection mobile 30 et 31, en saillie radialement vers l'extérieur, définissant entre elles une rainure 32 allongée axialement. La partie externe 2 comprend une languette 33 dirigée radialement vers l'intérieur, disposée dans la rainure 32 entre les portions de détection mobile 30 et 31. La languette 33 comprend un corps en matériau synthétique 34 isolant, dans lequel sont disposées une électrode de mesure 35 et une électrode de mesure 36 faisant face respectivement aux portions de détection mobile 30 et 31 de la partie interne 3, et deux électrodes de garde 37 et 38 disposées à une faible distance des électrodes de mesure 35 et 36 à l'intérieur de la languette 33, tandis que les électrodes de mesure 35 et 36 sont disposées en surface. Une couche diélectrique 39, 40 est disposée entre l'électrode 35, 36 et l'électrode de garde 37, 38. La languette 33 peut être réalisée sous la forme d'une portion de carte à circuit imprimée multicouche.

Dans tous ces modes de réalisation, des électrodes de garde peuvent également être disposées autour des électrodes de mesure, dans le même plan que ces dernières.

Avantageusement, les électrodes de mesure et les électrodes de garde peuvent être excitées simultanément afin de créer un blindage actif efficace.

Grâce à l'ensemble de ces précautions, on peut ainsi délimiter parfaitement d'un point de vue électrique les électrodes de mesure et éviter les effets de bord.

On évite également grâce au blindage électromagnétique par les électrodes de garde les capacités parasites et les perturbations de mesure de capacité qui seraient dues à des champs électromagnétiques extérieurs. On s'assure ainsi que la mesure de capacité effectuée est bien représentative de la variation d'entrefer entre l'électrode de mesure et l'électrode correspondante lui faisant face, c'est-à-dire entre les électrodes fixes et mobiles.

Les modes de réalisation des figures 4 et 6 permettent d'effectuer des mesures de capacités différentielles, ce qui augmente considérablement la fiabilité et la précision de la mesure des variations d'entrefer par le biais des mesures de capacités. En effet, des variations parasites de capacités qui peuvent être sensibles au niveau de chaque couple d'électrodes s'annulent ou s'atténuent mutuellement par la mesure différentielle.

Le dispositif de logement 1, considéré ici comme un corps d'épreuve déformable, est utilisé dans son domaine élastique. Cette utilisation permet d'avoir une relation entre charge et déformation sans hystérésis, puisqu'il n'y a pas de frottement. Pour limiter la fatigue des matériaux, le dimensionnement des bras de liaison 21 limite leur utilisation sous un plafond. On peut choisir une contrainte maximale appliquée, de l'ordre de 80% de la limite élastique du dispositif de logement, pour pouvoir supporter 10 millions de cycles de déformation élastique sans déformation permanente significative.

Les matériaux des différents éléments voisins de l'entrefer, c'est-à-dire du dispositif de logement 1 et des électrodes, sont choisis avec des coefficients de dilatation et des dimensions tels que les variations dimensionnelles des éléments dues aux changements de température se compensent et ne provoquent pas de variations significatives d'entrefer. Dans ce but, le rapport entre les coefficients de dilatation thermique des matériaux utilisés pour lesdits éléments voisins de l'entrefer, est choisi proche de l'inverse du ratio des épaisseurs desdits éléments pour permettre un entrefer constant sur une large plage de température.

Par exemple, si on dispose d'un corps d'épreuve en alliage d'aluminium avec un coefficient, d'expansion, thermique de 23 ppm/°K, laissant un entrefer initial Eᵢ de 1,5 mm avant assemblage de l'électrode rapportée, on peut choisir une électrode rapportée composée par exemple d'un circuit imprimé type verre-téflon, de coefficient d'expansion thermique de l'ordre de 34,5 ppm/°K et d'épaisseur standard d'1 mm. L'entrefer du corps d'épreuve en aluminium se dilate de 1,5 mm x 23 ppm/°K = 34,5 nanomètre/°K. L'électrode rapportée, se dilate de 1 mm x 34,5 ppm/°K = 34,5 nanomètre/°K. L'entrefer utile de mesure séparant la face de l'électrode rapportée et la face correspondante en aluminium est alors constant et égal à 1,5 - 1 = 0,5 mm.

A l'inverse, on peut choisir d'optimiser l'entrefer initial du support en fonction des matériaux utilisés pour le circuit imprimé formant l'électrode. Par exemple, sachant qu'une électrode rapportée réalisée en un matériau possédant un coefficient d'expansion thermique de 50 ppm/°K et d'épaisseur standard de 0,5 mm est particulièrement économique et en désignant par Eᵢ l'entrefer initial du corps d'épreuve en aluminium, on aura la relation : Eᵢ x 23 = 0,5 x 50, d'où on déduit Eᵢ = 1,086 mm, soit un entrefer utile de mesure de Eᵢ - 0,5 = 0,586 mm.

Les exemples illustrés aux figures 4 et 6 montrent des capteurs de type capacitif. Bien entendu, le dispositif de logement 1 peut être équipé de capteurs de déplacement de type inductif.

Le dispositif de logement capteur réalisé suivant un aspect de l'invention est particulièrement précis et fiable. La mesure effectuée est sans hystérésis significative et n'est pratiquement pas affectée par des phénomènes extérieurs parasites, tels que des variations de température ou d'hygrométrie.

Grâce à l'invention, on dispose donc d'un logement support à capteurs de charge particulièrement économique, pouvant être utilisé avec des roulements conventionnels ou pourvu de capteurs de vitesse et/ou de température, pouvant être montés de façon simple, le logement assurant une mesure précise et fiable de la charge.

## Revendications

1. Dispositif de logement (1) pourvu d'un système de détection de la charge appliquée sur un élément disposé dans ledit logement, d'une partie interne (3) configurée pour supporter ledit élément et d'une partie externe (2) servant à la fixation du dispositif sur un ensemble mécanique, la partie interne (3) étant reliée à la partie externe (2) par au moins deux éléments de liaison (22) déformables, de telle sorte que la partie interne (3) puisse se déplacer par rapport à la partie externe (2) sous l'action d'une charge appliquée sur ledit élément, le système de détection de la charge appliquée comprenant un moyen de détection directe du déplacement de l'une des parties, interne ou externe, par rapport à l'autre partie, externe ou interne, sous l'action d'une charge appliquée sur ledit élément, une portion de détection mobile (13) liée rigidement à la partie interne (3) et ainsi mobile sous l'action de la charge, et la partie externe (2) comprenant une portion de détection fixe (20) venant en regard avec la portion de détection mobile pour former au moins un entrefer avec ladite portion de détection mobile, **caractérisé par le fait que** lesdites portions de détection sont disposées à proximité du plan axial de symétrie du dispositif sensiblement perpendiculaire à la charge à mesurer.

2. Dispositif selon la revendication 1, dans lequel ladite portion de détection de la partie interne est découplée de la partie externe par rapport à laquelle ladite portion de détection peut se déplacer sans contact, la partie externe (2) comprenant des moyens de détection pour mesurer les déplacements de la partie interne par le biais des variations d'entrefer entre les portions de détection fixe et mobile.

3. Dispositif selon l'une quelconque des revendications précédentes, comprenant au moins deux plans de symétrie perpendiculaires entre eux.

4. Dispositif selon l'une quelconque des revendications précédentes, dans lequel la partie externe (2), la partie interne (3) et les éléments de liaison (22) forment un ensemble monobloc.

5. Dispositif selon l'une quelconque des revendications précédentes, dans lequel la portion de détection fixe (13) est rapportée à l'intérieur de la partie externe.

6. dispositif selon l'une quelconque des revendications précédentes, dans lequel les parties fixe et mobile étant séparées par un entrefer entre des électrodes supportées par la partie fixe et par la partie mobile, l'entrefer reste sensiblement constant lorsque la température varie, les épaisseurs et les coefficients de dilatation thermique des portions du corps d'épreuve susceptibles de faire varier l'entrefer et des électrodes étant déterminés de telle sorte qu'une variation positive d'au moins un élément est compensée par une variation négative d'au moins un autre élément.

7. Dispositif selon l'une quelconque des revendications précédentes, dans lequel le moyen de détection du déplacement de la partie mobile par rapport à la partie fixe comprend au moins un capteur capacitif.

8. Dispositif selon la revendication 7, comprenant deux paires d'électrodes pour effectuer une mesure différentielle.

9. Dispositif selon l'une quelconque des revendications 1 à 6, dans lequel le moyen de détection directe du déplacement de la partie mobile par rapport à la partie fixe comprend au moins un capteur inductif.

10. Dispositif selon l'une quelconque des revendications précédentes, comprenant un module de calcul de la charge appliquée audit dispositif en fonction du déplacement détecté par le système de détection.

11. Dispositif selon l'une quelconque des revendications précédentes, dans lequel ledit élément disposé dans le logement comprend un roulement.

12. Machine à laver comprenant un tambour monté à rotation sur un bâti fixe au moyen d'au moins un palier à roulement disposé dans un dispositif selon l'une quelconque des revendications précédentes.

## Patentansprüche

1. Aufnahmesitz-Vorrichtung (1), die mit einem System zum Detektieren der auf ein in dem Aufnahmesitz angeordnetes Element ausgeübten Last versehen ist und einen inneren Teil (3), der konfiguriert ist, um das Element zu tragen, und einen äußeren Teil (2), der der Befestigung der Vorrichtung an einer mechanischen Anordnung dient, umfasst, wobei der innere Teil (3) mit dem äußeren Teil (2) durch wenigstens zwei verformbare Verbindungselemente (22) in der Weise verbunden ist, dass sich der innere Teil (3) in Bezug auf den äußeren Teil (2) unter der Wirkung einer auf das Element ausgeübten Last verlagern kann, wobei das System zum Detektieren der ausgeübten Last ein Mittel zum direkten Detektieren der Verlagerung eines der Teile, des inneren oder des äußeren, in Bezug auf den anderen Teil, den äußeren oder den inneren, unter der Wirkung einer auf das Element ausgeübten Last und einen beweglichen Detektionsabschnitt (13), der mit dem inneren Teil (3) starr verbunden ist und somit unter der Wirkung der Last beweglich ist, umfasst und wobei der äußere Teil (2) einen festen Detektionsabschnitt (20) umfasst, der sich gegenüber dem beweglichen Detektionsabschnitt befindet, um wenigstens einen Luftspalt mit dem beweglichen Detektionsabschnitt zu bilden, **dadurch gekennzeichnet, dass** die Detektionsabschnitte in der Nähe der axialen Symmetrieebene der Vorrichtung, die zu der zu messenden Last im Wesentlichen senkrecht ist, angeordnet sind.

2. Vorrichtung nach Anspruch 1, wobei der Detektionsabschnitt des inneren Teils von dem äußeren Teil, in Bezug auf den sich der Detektionsabschnitt kontaktlos verlagern kann, entkoppelt ist, wobei der äußere Teil (2) Detektionsmittel umfasst, um die Verlagerungen des inneren Teils aufgrund der Verschiebung der Veränderungen des Luftspalts zwischen dem festen und dem beweglichen Detektionsabschnitt zu messen.

3. Vorrichtung nach einem der vorhergehenden Ansprüche, die wenigstens zwei zueinander senkrechte Symmetrieebenen aufweist.

4. Vorrichtung nach einem der vorhergehenden Ansprüche, wobei der äußere Teil (2), der innere Teil (3) und die Verbindungselemente (22) eine Monoblockanordnung bilden.

5. Vorrichtung nach einem der vorhergehenden Ansprüche, wobei der feste Detektionsabschnitt (13) innerhalb des äußeren Teils angebracht ist.

6. Vorrichtung nach einem der vorhergehenden Ansprüche, wobei der feste und der bewegliche Teil durch einen Luftspalt zwischen Elektroden, die durch den festen Teil bzw. durch den beweglichen Teil getragen werden, getrennt sind, wobei der Luftspalt im Wesentlichen konstant bleibt, wenn sich die Temperatur verändert, wobei die Dicken und die Wärmeausdehnungskoeffizienten der Abschnitte des Probenkörpers, die den Luftspalt und die Elektroden verändern können, in der Weise bestimmt sind, dass eine positive Veränderung wenigstens eines Elements durch eine negative Veränderung wenigstens eines anderen Elements ausgeglichen wird.

7. Vorrichtung nach einem der vorhergehenden Ansprüche, wobei das Mittel zum Detektieren der Verlagerung des beweglichen Teils in Bezug auf den festen Teil wenigstens einen kapazitiven Sensor umfasst.

8. Vorrichtung nach Anspruch 7, die zwei Elektrodenpaare umfasst, um eine differentielle Messung auszuführen.

9. Vorrichtung nach einem der Ansprüche 1 bis 6, wobei das Mittel zum direkten Detektieren der Verlagerung des beweglichen Teils in Bezug auf den festen Teil wenigstens einen induktiven Sensor umfasst.

10. Vorrichtung nach einem der vorhergehenden Ansprüche, die ein Modul zum Berechnen der auf die Vorrichtung ausgeübten Last als Funktion der durch das Detektionssystem detektierten Verlagerung umfasst.

11. Vorrichtung nach einem der vorhergehenden Ansprüche, wobei das in dem Aufnahmesitz angeordnete Element ein Wälzlager umfasst.

12. Waschmaschine, die eine Trommel umfasst, die an einem festen Rahmen mittels eines Wälzlagers, das in einer Vorrichtung nach einem der vorhergehenden Ansprüche angeordnet ist, drehbar montiert ist.

## Claims

1. Housing device (1) provided with a system for detecting the load applied to an element arranged in said housing, with an internal part (3) configured to support said element and with an external part (2) used for fixing the device to a mechanical assembly, the internal part (3) being connected to the external part (2) by at least two reformable connecting elements (22), such that the internal part (3) may be displaced relative to the external part (2) under the action of a load applied to said element, the system for detecting the applied load comprising a means for directly detecting the displacement of one of the parts, internal or external, relative to the other part, external or internal, under the action of a load applied to said element, a mobile detection portion (13) rigidly connected to the internal part (3) and thus mobile under the action of the load, and the external part (2) comprising a fixed detection portion (20) aligned with the mobile detection portion to form at least one gap with said mobile detection portion, **characterized in that** said detection portions are arranged in the vicinity of the axial plane of symmetry of the device, substantially perpendicular to the load to be measured.

2. Device according to Claim 1, in which said detection portion of the internal part is uncoupled from the external part, relative to which said detection portion may be displaced without contact, the external part (2) comprising detection means to measure the displacements of the internal part by means of the variations in the gap between the fixed and mobile detection portions.

3. Device according to either of the preceding claims, comprising at least two planes of symmetry perpendicular to one another.

4. Device according to any one of the preceding claims, in which the external part (2), the internal part (3) and the connecting elements (22) form a one-piece assembly.

5. Device according to any one of the preceding claims, in which the fixed detection portion (13) is connected to the interior of the external part.

6. Device according to any one of the preceding claims, in which as the fixed and mobile parts are separated by a gap between the electrodes supported by the fixed part and by the mobile part, the gap remains substantially constant when the temperature varies, the thicknesses and the coefficients of thermal expansion of the portions of the test body capable of varying the gap and the electrodes being determined such that a positive variation of at least one element is compensated by a negative variation of at least one further element.

7. Device according to any one of the preceding claims, in which the means for detecting the displacement of the mobile part relative to the fixed part comprises at least one capacitive sensor.

8. Device according to Claim 7, comprising two pairs of electrodes to carry out a differential measurement.

9. Device according to any one of Claims 1 to 6, in which the means for direct detection of the displacement of the mobile part relative to the fixed part comprises at least one inductive sensor.

10. Device according to any one of the preceding claims, comprising a module for calculating the load applied to said device, according to the displacement detected by the detection system.

11. Device according to any one of the preceding claims, in which said element arranged in the housing comprises a bearing.

12. Washing machine comprising a drum rotatably mounted on a fixed frame, by means of at least one roller bearing arranged in a device according to any one of the preceding claims.
